# EUROPÄISCHE PATENTANMELDUNG

(11) **EP 1 674 191 A2**
(43) Veröffentlichungstag der Anmeldung: **28.06.2006**
(21) Anmeldenummer: 05111922.0
(22) Anmeldetag: 09.12.2005
(51) Int. Cl.: B23K 26/24

(54) **Verfahren zum Herstellen eines zwei Bleche umfassenden Blechbauteils sowie nach dem Verfahren hergestelltes Blechbauteil**

(30) Priorität: 22.12.2004 CH 21332004
(71) Anmelder: SCHLEGEL AG, 9403 Goldach (CH)
(72) Erfinder: SCHLEGEL, Marcel, 9403, Goldach (CH); HARTMANN, Egbert, 9403, Goldach (CH)
(74) Vertreter: Stocker, Kurt

(57) **Zusammenfassung**

Das vorliegende Verfahren bezieht sich auf die Herstellung eines Blechbauteils (10'), welches ein erstes Blech (11) mit einer ersten Dicke (d1) und ein auf einer ersten Seite mit einer wärmeempfindlichen Beschichtung (15) versehenes, zweites Blech (12) mit einer zweiten Dicke (d2) umfasst. Das Verfahren ist dadurch gekennzeichnet, dass das zweite, mit der wärmeempfindlichen Beschichtung (15) versehene Blech (12) bereitgestellt wird, dass das erste Blech (11) und das zweite Blech (12) in einem vorbestimmten Bereich miteinander in flächigen Kontakt gebracht werden, wobei die mit der wärmeempfindlichen Beschichtung (15) versehene erste Seite des zweiten Bleches (12) aussen zu liegen kommt, und dass in dem vorbestimmten Bereich mittels eines aus einer Strahlführungseinheit auf das erste Blech (11) gerichteten Schweissstrahls wenigstens eine aus einzelnen, voneinander beabstandeten Abschnitten (31) bestehende Schweissnaht (13, 14) als Überlappnaht mit einer Tiefe erzeugt wird, welche grösser als die erste Dicke und kleiner als die Summe aus erster und zweiter Dicke ist.

## Beschreibung

TECHNISCHES GEBIET

Die vorliegende Erfindung bezieht sich auf das Gebiet des Schweissens von Blechen. Sie betrifft ein Verfahren zum Herstellen eines Blechbauteils gemäss dem Oberbegriff des Anspruchs 1 sowie ein nach dem Verfahren hergestelltes Blechbauteil.

STAND DER TECHNIK

Bei der Herstellung von Fahrzeugen, insbesondere Schienenfahrzeugen oder Autos, werden Blechbauteile eingesetzt, die durch Verbinden mehrerer Bleche mittels einer oder mehrerer Schweissnähte erzeugt werden. Eine Schweissnaht kann dabei kontinuierlich sein oder als Steppnaht mit einzelnen, voneinander beabstandeten Schweissnahtabschnitten, oder als Folge von einzelnen Schweisspunkten ausgebildet sein. Bildet eines der Bleche des Blechbauteils eine von aussen sichtbare Fläche des Fahrzeugs, müssen bei der Herstellung des Blechbauteils besondere Vorkehrungen getroffen werden, um die beim Schweissen entstehenden Veränderungen am äusseren Blech (Anlauffarben, Verzug, Vertiefungen in der Aussenfläche, etc.) zu beseitigen (z.B. durch Spachteln, Lackieren, etc.), oder solche Veränderungen ganz zu vermeiden.

In der EP-A 1-0 761 375 wird ein Verfahren zum Schweissen gerippeversteifter Blechbauteile für Seitenwände von Schienenfahrzeugen beschrieben, bei dem die Versteifungsprofile ohne Luftspalt auf die Aussenbeblechung aufgelegt und mit dieser unter Verwendung eines Festkörper- oder C02-Lasers mittels Überlapp- oder Parallelschweissen beliebiger Nahtform durch den aufliegenden Schenkel des Versteifungsprofils hindurch und etwa 1/3 bis 2/3 in die Blechstärke der Aussenbeblechung hinein verbunden werden. Hinsichtlich der Vermeidung von Anlauffarben und Bauteilverzug an der Aussenseite der Aussenbeblechung ist es dabei nach Angaben der Druckschrift von Vorteil, die Schweissnaht als unterbrochene Naht bzw. als lineare Schrittschweissnaht auszubilden. Sowohl die Versteifungsprofile als auch die Aussenbeblechung sind aus Stahl. Die Aussenbeblechung wird erst nach dem Schweissen lackiert. Die Schweissung erfolgt mit einer minimalen Schweissgeschwindigkeit von 1 m/min bei einer Strahlleistung der Laserstrahlen von 1000 W bis 5000 W. Durch das angegebene Verfahren werden gemäss der Offenbarung störende Schrumpfmarkierungen und Anlauffarben an der Aussenseite der Aussenbeblechung vermieden, so dass diese auch nach deren Lackierung noch eine zufriedenstellende dekorative Aussenfläche aufweisen sollen. Nachteilig ist bei diesem Verfahren, dass durch die nachträgliche Lackierung die schweissbedingten Veränderungen der Oberfläche eher verstärkt als verdeckt werden.

Aus der US-A-5,451 ,742 ist ein Laserschweissverfahren, insbesondere für eine Anordnung aus Aluminiumteilen, bekannt, bei dem der Strahl eines Y AG-Lasers entlang der Schweissnaht mit etwa 90 mm/s verfahren wird, und mit einer Wiederholfrequenz von 6 Hz Laserstrahlpulse mit einer Länge von jeweils 18 ms ausgesendet werden. Es entsteht dann eine Folge von Schweisspunkten mit einem Abstand von etwa 15 mm. Es kann aber auch eine Steppnaht gebildet werden, indem intermittierend geschweisst wird. Die Schweissung wird an einer für eine Motorhaube vorgesehenen Anordnung aus zwei Blechen aus einer Aluminiumlegierung durchgeführt, die randseitig durch einen Falz miteinander formschlüssig verbunden sind. Bei der aus drei Blechlagen bestehenden Falzverbindung wird eine stoffschlüssige Schweissverbindung zwischen den beiden Blechen dadurch erreicht, dass mit dem Laserstrahl eine Überlappnaht zwischen zwei der drei Blechlagen erzeugt wird. Die von aussen sichtbare dritte Blechlage bleibt von der Schweissung praktisch unberührt, so dass schweissbedingte Veränderungen der Aussenfläche weitgehend ausgeschlossen werden können. Nachteilig ist bei dieser Art der Verbindung jedoch, dass vor der Schweissung in aufwändiger Weise der Falz hergestellt werden muss, und dass diese Art der Verbindung wegen des Falzes auf Randbereiche beschränkt bleibt.

DARSTELLUNG DER ERFINDUNG

Es ist Aufgabe der Erfindung, ein Verfahren zur schweisstechnischen Verbindung zweier Bleche zu einem Blechbauteil zu schaffen, welches die Nachteile bekannter Verfahren vermeidet und auf einfache Weise die Herstellung eines Blechbauteils mit einer dekorativen, hochwertigen Aussenfläche ermöglicht, welches insbesondere beim Innenausbau von Schienenfahrzeugen eingesetzt werden kann, sowie ein nach dem Verfahren hergestelltes Blechbauteil anzugeben.

Die Aufgabe wird durch die Gesamtheit der Merkmale der Ansprüche 1 und 16 gelöst. Der Kern der Erfindung besteht darin, dass eines der beiden schweisstechnisch zu verbindenden Bleche von vornherein mit einer wärmeempfindlichen dekorativen Beschichtung, z.B. einer Pulverbeschichtung, versehen ist, und dass durch Strahlschweissen durch das andere Blech hindurch eine aus einzelnen Schweissnahtabschnitten oder Schweisspunkten bestehende Überlappnaht erzeugt wird, deren Tiefe im beschichteten Blech endet. Überraschenderweise wird durch eine solche Steppnaht oder Punktnaht die thermische Belastung und die Verformung im Bereich der Schweissnaht so gering gehalten, dass die wärmeempfindliche Beschichtung auf der Aussenseite des Blechbauteils nicht verändert wird und die Schweissnaht praktisch nicht sichtbar ist. Hierdurch ist es möglich, von vornherein beschichtete Bleche einzusetzen, die grosstechnisch unter günstigen Bedingungen hergestellt werden können und sich durch eine Oberfläche von besonderer Gleichmässigkeit und optischer Güte auszeichnen. Die fertigen Blechbauteile können mit Vorteil beispielsweise als Innenwandverkleidungen von Schienenfahrzeugen eingesetzt werden.

Die beiden Bleche, die vorzugsweise aus Stahl oder einer Aluminiumlegierung bestehen, weisen bevorzugt Dicken von wenigen Millimetern, insbesondere zwischen 1 und 3 mm, auf, und die wärmeempfindliche Beschichtung ist vorzugsweise eine Pulverbeschichtung.

Gemäss einer vorteilhaften Ausgestaltung der Erfindung werden zur Erzeugung der wenigstens einen Schweissnaht die beiden Bleche und die Strahlführungseinheit relativ zueinander bewegt. Bei grösseren Blechbauteilen ist es dabei von Vorteil, wenn die beiden Bleche ortsfest gehalten werden und die Strahlführungseinheit über die Bleche hinweg bewegt wird, wobei zur Verbesserung der Qualität der Schweissnaht die beiden Bleche im Bereich der Schweissnaht gegeneinander gepresst werden.

Besonders bewährt hat sich dabei, dass die beiden Bleche auf einer Unterlage liegen, und dass die Bleche mittels Druckrollen gegeneinander gepresst werden, die an der Strahlführungseinheit befestigt sind und federnd auf das erste Blech drücken, wobei insbesondere auf beiden Seiten der Schweissnaht jeweils eine Druckrolle angeordnet ist.

Besonders schnell und effektiv ist das erfindungsgemässe Verfahren, wenn die beiden Bleche und die Strahlführungseinheit relativ zueinander über die Länge der Schweissnaht mit einer gleichmässigen Geschwindigkeit bewegt werden, und wenn die Schweissnaht aus einer Mehrzahl von untereinander beabstandeten Schweisspunkten besteht, die jeweils durch ein kurzzeitiges Hochfahren der Strahlleistung erzeugt werden, weil hier durch die Schweissanlage keine ausgewählten Punkte angefahren werden müssen. Die Geschwindigkeit der Relativbewegung beträgt vorzugsweise zwischen 10 und 100 mm/s, insbesondere zwischen 60 und 80 mm/s.

Als Schweissstrahl wird bevorzugt ein Laserstrahl mit einer Strahlleistung von mehreren 1000 W, insbesondere etwa 4000 bis 4500 W verwendet, wobei als Laserquelle ein diodengepumpter Nd:Y AG-Laser eingesetzt wird, und die Strahlführungseinheit mittels eines schienenmontierten 6-Achsen-Roboter bewegt wird.

Zur Verbesserung der Einkopplung des Laserstrahis in die Bleche wird jeweils am Anfang eines Schweisspunktes die Leistung des Laserstrahis über einen Zwischenwert hochgefahren.

Alternativ zu der aus den Schweisspunkten bestehenden Schweissnaht kann die Schweissnaht auch als Steppnaht ausgebildet sein und aus einer Mehrzahl von untereinander beabstandeten Schweissnahtabschnitten bestehen. In diesem Fall wird bevorzugt zur Ausbildung der Schweissnahtabschnitte ein Schweisszusatzwerkstoff zugeführt.

Eine weitere Ausgestaltung des Verfahrens nach der Erfindung ist dadurch gekennzeichnet, dass zwischen den beiden Blechen eine Zwischenlage mit schall- und/oder wärmeisolierender Wirkung angeordnet wird, welche an den für die Schweissverbindung vorgesehenen Stellen jeweils ein Loch aufweist, und dass das erste Blech an den für die Schweissverbindung vorgesehenen Stellen jeweils mit einer an die Löcher angepassten Prägung versehen ist, mit welcher sie durch die Löcher in der Zwischenlage hindurch mit dem zweiten Blech in flächigen Kontakt gebracht wird.

Das erfindungsgemässe Blechbauteil zeichnet sich dadurch aus, dass ein erstes Blech und ein auf einer ersten Seite mit einer wärmeempfindlichen Beschichtung versehenes, zweites Blech zusammen mit einer schall-und/oder wärmeisolierenden Zwischenlage unter Bildung einer Sandwichstruktur derart miteinander verbunden sind, dass die mit der wärmeempfindlichen Beschichtung versehene erste Seite des zweiten Bleches aussen zu liegen kommt, dass die beiden Bleche über eine Mehrzahl von Schweissnahtabschnitten miteinander stoffschlüssig verbunden sind, und dass die Schweissnahtabschnitte im Bodenbereich von in das erste Blech eingebrachten Prägungen angeordnet sind, mit welchen das erste Blech durch entsprechende Löcher in der Zwischenlage hindurch mit dem zweiten Blech in flächigem Kontakt steht.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1 in einer perspektivischen Ansicht den grundsätzlichen Aufbau eines Blechbauteils aus zwei (unbeschichteten) Blechen, die durch Überlappnähte in Form von Steppnähten miteinander verbunden sind;

Fig. 2 in einer zu Fig. 1 vergleichbaren Darstellung ein Blechbauteil aus zwei Blechen, die durch Überlappnähte in Form von Steppnähten miteinander verbunden sind, und von denen eines auf der Aussenseite mit einer wärmeempfindlichen Beschichtung versehen ist;

Fig. 3 in einer zu Fig. 2 vergleichbaren Darstellung ein Blechbauteil aus zwei Blechen, die durch Überlappnähte in Form von Reihen von Schweisspunkten miteinander verbunden sind, und von denen eines auf der Aussenseite mit einer wärmeempfindlichen Beschichtung versehen ist (Fig. 3a), sowie die Form der einzelnen Schweisspunkte (Fig. 3b);

Fig. 4 im Querschnitt (Fig. 4a) und in der Draufsicht von unten (Fig. 4b) ein Blechbauteil aus zwei Blechen, von denen eines auf der Aussenseite mit einer wärmeempfindlichen Beschichtung versehen ist, und zwischen denen eine schall- und/oder wärmedämmende Zwischenlage angeordnet ist;

Fig. 5 in der Seitenansicht eine Anlage zur Herstellung der Blechbauteile aus Fig. 2 bis 4;

Fig. 6 die Anlage aus Fig. 5 in Richtung der Schweissnaht gesehen; und

Fig. 7 ein beispielhaftes Strahlleistung-über-Zeit-Diagramm eines Lasers bei der Herstellung eines Schweisspunktes nach Fig. 3.

WEGE ZUR AUSFÜHRUNG DER ERFINDUNG

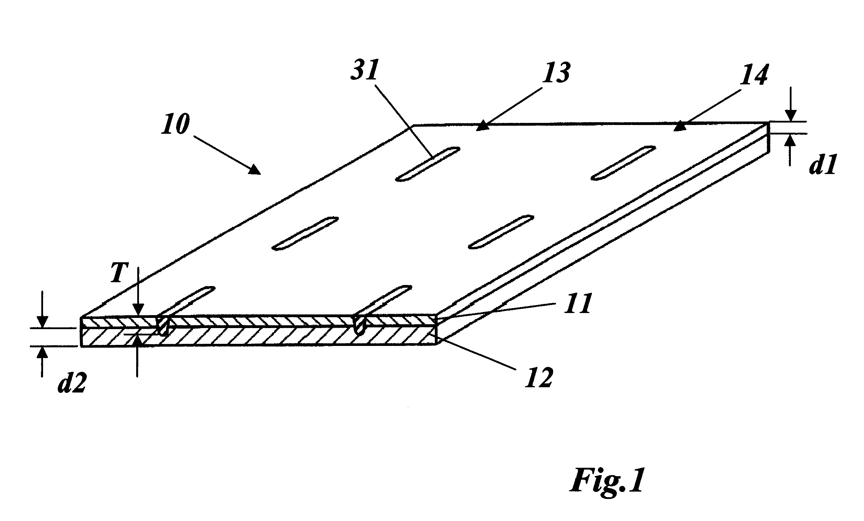

In Fig. 1 ist in einer perspektivischen Ansicht der grundsätzliche Aufbau eines Blechbauteils aus zwei (unbeschichteten) Blechen bzw. Blechteilen gezeigt, die durch Überlappnähte in Form von Steppnähten miteinander verbunden sind. Das Blechbauteil10 umfasst ein erstes Blech 11 mit einer Dicke d1 und ein zweites Blech 12 mit einer Dicke d2, die flächig aufeinander liegen. Die beiden Bleche 11, 12 sind im dargestellten Beispiel durch zwei Schweissnähte 13 und 14 verbunden, die als einzelne Schweissnahtabschnitte 31 umfassende Steppnähte ausgebildet sind. Die Dicken der Bleche 11,12 liegen im Millimeterbereich und betragen beispielsweise d1 = 1 mm und d2 = 2 mm. Die Bleche 11, 12 können aus Stahl aber auch aus Aluminium oder einer Aluminiumlegierung (z.B. AIMg3) sein. Das Blechbauteil10' aus Fig. 1 ist als ebenes Bauteil dargestellt. Es kann selbstverständlich aber auch gekrümmt oder abgewinkelt sein oder eine andere dreidimensionale Form aufweisen. Dies gilt ebenso für die in den anderen Figuren gezeigten planaren Konfigurationen. Die einzelnen Schweissnahtabschnitte 31 sind von der Seite des ersten Blechs 11 her in den Blechstapel eingebracht. Sie sind als Überlappnähte ausgebildet, die durch das erste Blech 11 hindurch in das zweite Blech 12 hineinreichen und im Blechstapel eine Tiefe T haben, die zwischen der Dicke d 1 des ersten Bleches 11 und der Summe d 1 +d2 der Dicken der beiden Bleche 11, 12 liegt. Zum Auffüllen der Schweissnahtabschnitte 31 wird ein Schweisszusatzwerkstoff in Drahtform verwendet, der bei AIMg3-Blechen beispielsweise aus AIMg4,5Mn bestehen kann.

Zur Herstellung der Schweissnähte 13, 14 wird ein Schweissstrahl, insbesondere ein Laserstrahl, verwendet, der mittels eines Roboters über den Blechstapel11, 12 bewegt wird. Der Roboter fährt bei abgeschalteter Strahlleistung den Anfangspunkt eines Schweissnahtabschnitts 31 an, schaltet die Strahlleistung ein, fährt dann bei eingeschalteter Strahlleistung die Linie des Schweissnahtabschnitts 31 bis zum Endpunkt ab, schaltet die Strahlleistung wieder ab, und bewegt sich schliesslich bei abgeschalteter Strahlleistung zum Anfangspunkt des nächsten Schweissnahtabschnitts. Die Verfahrgeschwindigkeit liegt im Bereich von beispielsweise 60 mm/s. Die Schweissnahtabschnitte 31 können dabei nicht nur gerade, zur Schweissnaht parallel liegende Strecken sein, sie können auch schräg zur Schweissnaht liegen, gekrümmt oder abgewinkelt sein, oder geschlossene Kreise oder Wellenlinien bilden, um auch quer zur Schweissnaht wirkenden Kräften besser standhalten zu können.

Durch die Ausbildung der Schweissnähte 13, 14 als Steppnähte mit begrenzter Tiefe T wird der Wärmeeintrag in die beiden Bleche 11, 12 und insbesondere in das untere Blech 12 begrenzt. Entsprechend kann dem Auftreten von Anlauffarben und Eindellungen im Bereich der Schweissnahtabschnitte 31 entgegengewirkt werden. Anders ist die Situation jedoch, wenn eines der Bleche 11, 12 auf der Aussenseite bereits vor Beginn des Fügeprozesses mit einer wärmeempfindlichen Beschichtung versehen ist. Eine solche wärmeempfindliche Beschichtung ist beispielsweise eine Pulverbeschichtung mit einem Kunststoffpulver, die zur Erzielung einer gleichmässigen, optisch und haptisch ansprechenden Oberfläche und zur Farbgebung eingesetzt wird und insbesondere Anwendung findet, wenn es sich bei dem Blechbauteil um die Innenverkleidung eines Schienenfahrzeugs oder dgl. handelt. Obgleich der Wärmeeintrag durch die begrenzte Tiefe der Schweissnaht und ihrer Ausbildung als Steppnaht die Veränderungen an der metallischen Aussenfläche des zweiten Bleches deutlich reduziert, war aufgrund der lokalen Erwärmung gleichwohl zu erwarten, dass sich eine vor dem Schweissen aufgebrachte wärmeempfindliche Schicht durch den Schweissvorgang so verändert, dass sie optisch nicht mehr als einheitlich wahrgenommen wird. Es hat sich jedoch überraschenderweise herausgestellt, dass mit dem oben umrissenen Schweissverfahren auch ein aus zwei Blechen gefügtes Blechbauteil hergestellt werden kann, bei dem eines der Bleche auf der Aussenseite mit einer dekorativen wärmeempfindlichen Beschichtung versehen ist, ohne dass die dekorativen Eigenschaften der Beschichtung verloren gehen oder sichtbar beeinträchtigt werden. Hierdurch ist es möglich, insbesondere für die Inneneinrichtung von Fahrzeugen (Bahnen, Automobilen, Flugzeugen, Schiffen) hochwertige Wand- oder Deckenverkleidungen zu fertigen, die industriell beschichtete Bleche verwenden.

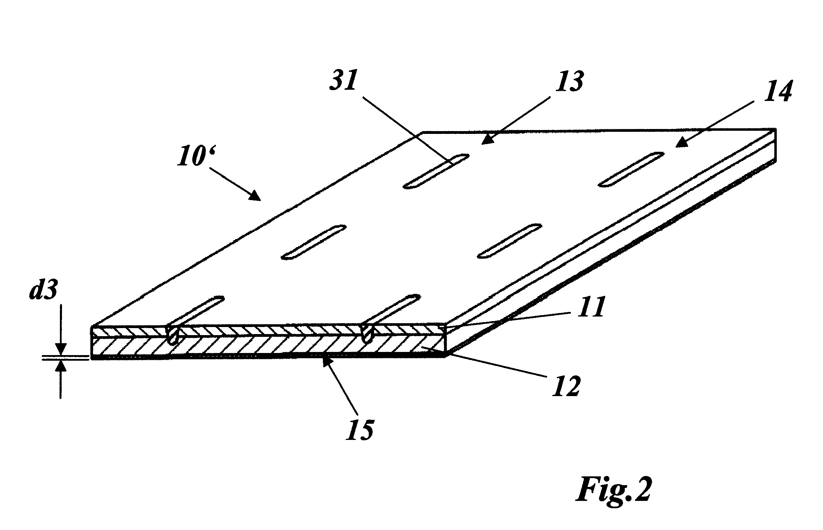

Fig. 2 ist in einer zu Fig. 1 analogen Darstellung ein Blechbauteil 1 0' wiedergegeben, das aus einem unbeschichteten ersten Blech 11 und einem mit einer wärmeempfindlichen Beschichtung 15 versehenen zweiten Blech 12 zusammengesetzt ist. Die Dicken der Bleche 11,12 sind wiederum d1 und d2, die Dicke der Beschichtung ist d3 und entspricht der bei pulverbeschichteten Blechen üblichen Schichtdicke. Die beiden Bleche 11, 12 sind auch hier durch die Schweissnähte 13, 14 verbunden, die als Überlappnähte in Form von Steppnähten mit einzelnen, voneinander beabstandeten Schweissnahtabschnitten 31 ausgebildet sind. Als Schweissverfahren kommt aufgrund der besonderen Anforderungen nur ein Strahlschweissverfahren in Betracht, also ein Elektronenstrahl- oder ein Laserstrahlverfahren. Sehr gute Erfahrungen wurden mit einem Laserstrahlverfahren gemacht, das wie folgt charakterisiert werden kann:
- Die Energiedichte ist bei dem Verfahren so hoch und der Schweissprozess ist so schnell, dass die thermische Belastung des Materials sehr gering ist, sodass kein Angriff auf die beschichtete Oberfläche erfolgen kann.
- Die beiden zu fügenden Bleche 11, 12 müssen in einer LehreNorrichtung gehalten werden, die derart konstruiert ist, dass die Bleche bzw. Blechteile eng aufeinander liegen. Andernfalls findet keine Verbindung statt, sondern es werden lediglich Löcher ausgeschnitten. Zusätzlich oder alternativ können lokale Andruckmittel wie Druckrollen im Bereich des Laserstrahis eingesetzt werden.
- Beim Schweissprozess wir das Material des oberen (ersten) Bleches 11 auf das Material des unteren (zweiten Bleches) 12 aufgeschmolzen (Überlappnaht).
- Die richtige Fokuslage des Laserstrahis ist entscheidend für die Verbindung (Abstand der Linse in der Strahlführungseinheit zum Werkstoff).
- Die Schweissnähte sind sehr klein. Sie werden als Steppnähte oder in Form von Punktverschweissungen ausgeführt.
- Der Schweissprozess ist sehr schnell, womit der Prozess eine hohe Produktivität aufweist.
- Als Laserquelle hat sich ein diodengepumpter Nd:YAG-Festkörperlaser mit einer Ausgangsleistung von 4400 W bei einer Wellenlänge von 1063 nm (z.B. Rofin Sinar DY 044) bewährt.
- Das Laserlicht wird über Lichtleitfasern in eine Strahlführungseinheit eingekoppelt, die mittels eines 6-achsigen, steuerbaren, schienen montierten Roboters (z.B. Fanuc M-16i) entlang der Schweissnahtlinie über die Bleche bewegt wird.
- Zum Auffüllen der Schweissnahtabschnitte 31 wird mittels einer an der Strahlführungseinheit 33 angeordneten, steuerbaren Drahtvorschubeinheit ein drahtförmiger Schweisszusatzwerkstoff zugeführt.

Die Verfahrgeschwindigkeit des Laserstrahis sowie die Strahlleistung und Fokuslage müssen in Abhängigkeit vom Material und der Dicke der beiden Bleche bzw. Blechteile so gewählt werden, dass die Schweissnähte 13,14 ausreichend überlappen, ohne die beschichtete Aussenfläche des zweiten Bleches 12 zu beeinträchtigen. So sind beispielsweise für zwei Bleche aus AIMg3 mit den Dicken d1 = 1 mm und d2 = 2 mm bei einer Strahlleistung von 4200 W, einer Verfahrgeschwindigkeit von 60 mm/s und einer Fokuslage von 2,5 mm oberhalb der Bleche sehr gute Schweissergebnisse erzielt worden. Als Schweisszusatzwerkstoff wurde ein Draht aus AIMg3 verwendet.

Steppnähte 13, 14 der in Fig. 1 und 2 gezeigten Art eignen sich hervorragend für das Fügen von Blechbauteilen, insbesondere wenn eines der beiden Bleche bzw. Blechteile pulverbeschichtet ist. Einschränkungen ergeben sich lediglich in der Geschwindigkeit des Verfahrens: Der Roboter muss zunächst jeweils den vorbestimmten Anfangspunkt eines Schweissnahtabschnitts 13 anfahren, dann wird die Strahlleistung hochgeschaltet, anschliessend fährt der Roboter mit eingeschaltetem Laserstrahl zum vorbestimmten Endpunkt des Schweissnahtabschnitts 13, dort wird die Strahlleistung wieder heruntergeschaltet und der Roboter fährt mit ausgeschaltetem Laserstrahl zum nächsten vorbestimmte Anfangspunkt. Das Anfahren von vorgegebenen Punkten in Wechselwirkung mit dem dortigen Ein- bzw. Ausschalten des Laserstrahis beansprucht Steuerungszeit in der Robotersteuerung und beschränkt so die Ablaufgeschwindigkeit des Schweissprozesses.

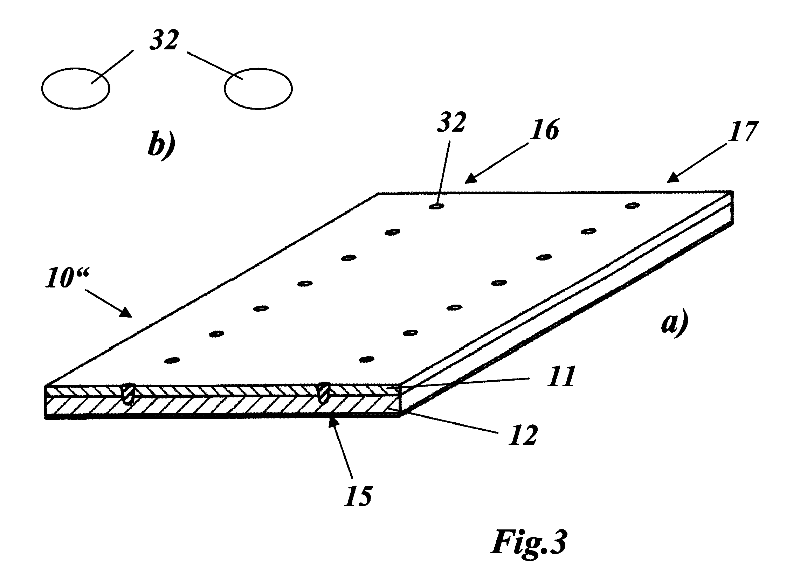

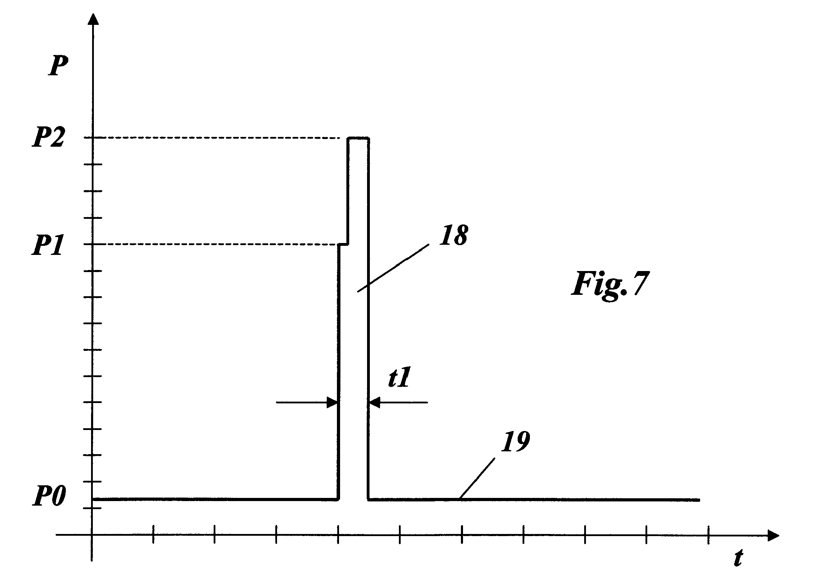

Eine deutliche Beschleunigung des Schweissprozesses und damit eine Reduktion der Fertigungszeit lässt sich dadurch erreichen, dass die Strahlführungseinheit vom Roboter mit gleichbleibender Geschwindigkeit entlang der Linie der Schweissnaht verfahren wird, und dass zur Bildung der Schweissnaht eine Reihe von aufeinanderfolgenden, voneinander beabstandeten Schweisspunkten dadurch gesetzt wird, dass der Laserstrahl zu bestimmten Zeitpunkten kurzzeitig (pulsartig) hochgeschaltet wird. Es ergibt sich dann das in Fig. 3 dargestellte Blechbauteil ", das wiederum aus den Blechen 11 und 12 mit der Beschichtung 15 besteht, nunmehr jedoch durch Schweissnähte 16, 17 gefügt ist, die jeweils aus einer Reihe von einzelnen Schweisspunkten 32 bestehen (Fig. 3a). Die Schweisspunkte 32, die gemäss Fig. 3b wegen der gleichmässigen Verfahrgeschwindigkeit des Laserstrahis eine annähernd ovale Form haben, werden jeweils durch einen pulsförmigen zeitlichen Verlauf P(t) der Strahlleistung P über der Zeit t erzeugt, wie er im Diagramm der Fig. 7 beispielhaft dargestellt ist. Beim Fügen von zwei Blechen aus der bereits erwähnten Aluminiumlegierung mit einem aus dem Nd:Y AG-Laser stammenden Laserstrahl wird die Strahlleistung P im Bereich vor und hinter dem Puls 18 zunächst auf einem Grundniveau 19 von PO von beispielsweise 250 W gehalten. Dies ist vorteilhaft für die Dioden, mit denen die Laserquelle gepumpt wird. Soll nun ein Schweisspunkt 32 erzeugt werden, wird über einen kurzen Zeitraum t1 die Strahlleistung pulsartig hochgefahren und anschliessend wieder auf das Grundniveau 19 abgesenkt. Das Hochfahren der Strahlleistung P innerhalb des Pulses 18 erfolgt vorzugsweise in zwei Stufen: In einer ersten Stufe wird die Strahlleistung auf einen ersten Wert P1 von z.B. 2200 Werhöht, um dann in der zweiten Stufe weiter auf ein P2 von z.B. 3000 Werhöht zu werden. Die Gesamtdauer t1 des Pulses 18 beträgt bei einer Verfahrgeschwindigkeit von mehr als 60 mm/s beispielsweise etwa 50 ms, von denen 20 ms auf dem Wert P1 verbracht werden.

Die Werte von t1, PO, P1 und P2 können in einem weiteren Bereich variieren und sollen nur die Grössenordnung veranschaulichen. Wichtig ist für die Erzeugung der Schweisspunkte 32 das abgestufte Hochfahren der Strahlleistung P, das dafür sorgt, dass die Strahlleistung so weit wie möglich in die Bleche eingekoppelt wird, ohne reflektiert zu werden.

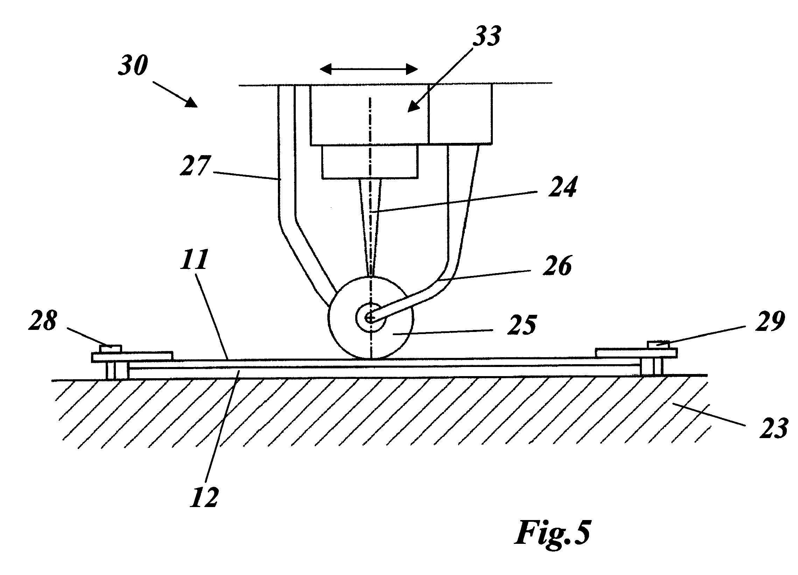

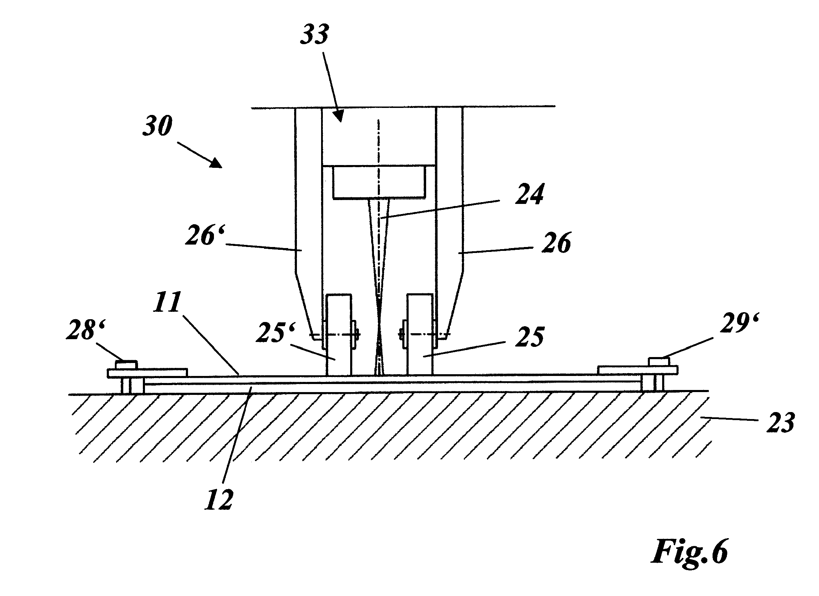

Ein weiterer wichtiger Punkt für die Qualität des Fügeprozesses ist der enge Kontakt der beiden Bleche 11, 12 im unmittelbaren Bereich der Schweisspunkte bzw. Schweissnahtabschnitte 31. Grundsätzlich ist es denkbar, den Stapel aus den beiden aufeinanderliegenden Blechen 11, 12 entlang der Schweissnahtlinie in eine geeignete Vorrichtung einzuspannen, mittels deren die beiden Bleche entlang der Linie aufeinandergepresst werden. Eine solche Massnahme wäre jedoch in der Vorbereitung aufwändig und wenig flexibel bei wechselnden Schweissnahtpositionen und -verläufen. Es wird deshalb vorgeschlagen, die Bleche 11, 12 nur jeweils lokal im Bereich des Laserstrahis aufeinander zu pressen und den Anpressvorgang mit dem Laserstrahl mitzubewegen. Eine dafür geeignete Vorrichtung ist in den Fig. 5 und 6 wiedergegeben. Gezeigt ist in den Figuren 5 und 6 innerhalb der Schweissanlage 30 der untere Teil der am Roboterarm befestigten und mittels des Roboterarms verfahrbaren Strahlführungseinheit 33, aus welcher der zum Schweissen benutzte Laserstrahl 24 nach unten austritt. Auf der linken Seite der Strahlführungseinheit 33 ist in Fig. 5 eine Drahtzuführung 27 vorgesehen, durch die der Schweissstelle drahtförmiger Schweisszusatzwerkstoff zugeführt werden kann. Auf der rechten Seite der Strahlführungseinheit 33 sind seitlich sich nach unten erstreckende Haltearme 26, 26' angeordnet, die zum unteren Ende hin nach innen abknicken. An den unteren Enden der Haltearme 26, 26' ist jeweils eine Druckrolle 25, 25' um eine horizontale Drehachse drehbar befestigt. Die parallel laufenden Druckrollen 25, 25' nehmen den Laserstrahl 24 in die Mitte. Sie drücken beim Schweissen auf den darunterliegenden Blechstapel11, 12, wobei die abgebogenen Haltearme 26, 26' elastisch nach oben gebogen werden und den nötigen Anpressdruck erzeugen.

Die beiden zu verschweissenden Bleche bzw. Blechteile 11, 12 werden auf eine Unterlage 23 gelegt und durch randseitig angeordnete lösbare Spannvorrichtungen 28,28' und 29, 29' relativ zueinander und zur Unterlage 23 fixiert. Die Strahlführungseinheit 33 wird dann zum Schweissen soweit auf die Bleche 11,12 abgesenkt, bis die gewünschte Fokuslage des Laserstrahis 24 erreicht ist. Gleichzeitig drücken die Druckrollen 25, 25' auf die Bleche 11, 12 und beseitigen so mögliche Zwischenräume zwischen den Blechen 11, 12 im Bereich der Schweissung. Der Roboterarm fährt dann mit der Strahlführungseinheit 33 eine vorprogrammierte Linie ab, auf der in gleichmässigen Abständen zur Bildung der Schweissnaht 16,17 bzw. 13, 14 Schweisspunkte 32 oder Schweissnahtabschnitte 31 gesetzt werden. Die Druckrollen 25, 25' rollen dabei auf der Oberfläche des ersten Bleches 11 ab. Es versteht sich von selbst, dass auch andere Anpressvorrichtungen und -verfahren denkbar sind. So können anstelle der Druckrollen beispielsweise Gleitschuhe oder -kufen eingesetzt werden, die das erste Blech beim Verfahren der Strahlführungseinheit 33 lokal gegen das zweite Blech pressen.

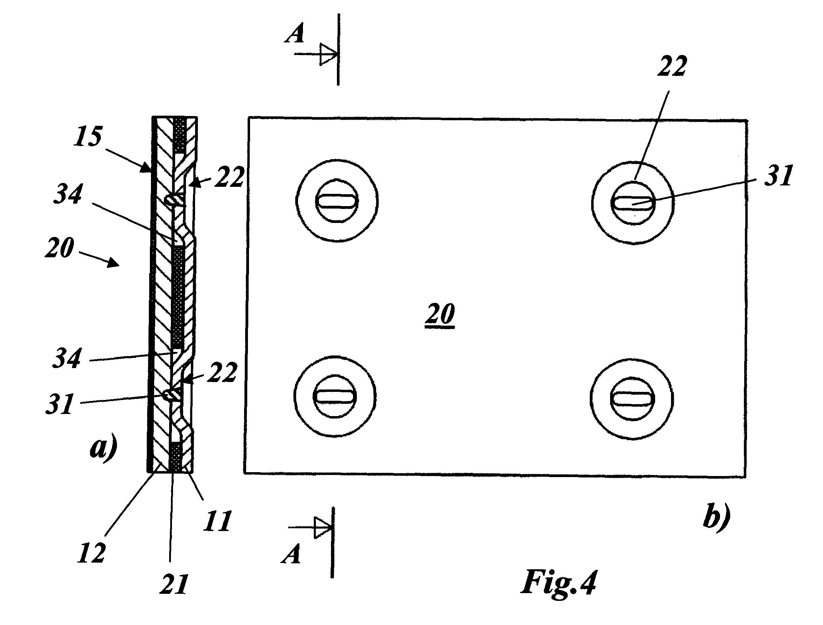

Das erfindungsgemässe Verfahren ermöglicht es, ein erstes unbeschichtetes Blech oder Blechteil mit einem zweiten, auf einer Seite pulverbeschichteten Blech oder Blechteil direkt und flächig durch Strahlschweissen zu verbinden, ohne dass die Beschichtung des zweiten Bleches in optisch auffälliger Weise verändert wird. Es kann aber auch dazu eingesetzt werden zwei Bleche unter Einbeziehung einer Zwischenlage zu verbinden, die dem fertigen Blechbauteil insbesondere schall- und/oder wärmedämmende Eigenschaften verleiht. Eine solche Zwischenlage kann dabei aus einem Kunststoff oder einem anderen Material mit entsprechenden Eigenschaften bestehen und beispielsweise porös oder elastisch sein. Ein entsprechendes beispielhaftes Blechbauteil 20 ist in Fig. 4 in der Draufsicht von hinten (Fig. 4b) und im Schnitt (Fig. 4a) wiedergegeben.

Das Blechbauteil 20 umfasst wiederum ein erstes Blech 11 und ein zweites Blech 12, das auf der Aussenseite mit einer wärmeempfindlichen Beschichtung 15 versehen ist. Zwischen den beiden Blechen 11, 12 ist eine Zwischen lage 21 angeordnet, die dem fertigen Blechbauteil20 je nach Auswahl verschiedene zusätzliche Eigenschaften (thermisch, akustisch etc.) verleihen kann. Um den für die Schweissung notwendigen direkten Kontakt zwischen den beiden Blechen 11, 12 herzustellen, sind in der Zwischenlage 21 über die Fläche verteilt Löcher 34 vorgesehen, die z.B. ausgestanzt sein können und im Beispiel der Fig. 4 kreisrund ausgebildet sind. Der Verteilung und Grösse der Löcher 34 entsprechend sind in das erste Blech 11 napfförmige Prägungen 22 eingebracht, deren Prägetiefe in etwa der Dicke der Zwischenlage 21 entspricht. Zum Schweissen werden die Zwischenlage 21 und das erste Blech 11 im Stapel so auf das zweite Blech 12 gelegt, dass die Prägungen 22 im ersten Blech 11 durch die Löcher 34 in der Zwischenlage 21 hindurch mit dem Boden auf dem zweiten Blech 12 aufsetzen. Beim Anpressen des ersten Bleches 11 an das zweite Blech 12 wird dabei gleichzeitig die Zwischenlage 21 elastisch zusammengedrückt, um einen flächigen Kontakt zu beiden Blechen 11, 12 zu erreichen. Die beiden Bleche werden dann in der weiter oben beschriebenen Weise durch als Überlappnähte ausgebildete Steppnähte verbunden, deren Schweissnahtabschnitte 31 sich jeweils über die Böden der Prägungen 22 erstrecken. Auf diese Weise wird ein akustisch gedämpftes und/oder wärmegedämmtes Blechbauteil speziell für die Innenauskleidung geschaffen, das sich nicht nur durch eine ansprechende Oberfläche auszeichnet, sondern auch verbesserte thermische und akustische Eigenschaften aufweist.

Insgesamt ergibt sich mit der Erfindung ein Verfahren zur Herstellung von aus zwei Blechen bzw. Blechteilen zusammengesetzten Blechbauteilen, das sich durch eine hohe Flexibilität der Fertigung auszeichnet, sehr kurze Fertigungszeiten ermöglicht und zu Blechbauteilen führt, die bei hoher optischer und haptischer Qualität sehr gute mechanische und anderweitige Eigenschaften aufweisen und ohne Nachbearbeitung direkt eingesetzt werden können.

BEZUGSZEICHENLISTE

10,10',10",20 Blechbauteil
11,12 Blech (Blechteil)
13,14 Schweissnaht (Steppnaht) 15 Beschichtung
16,17 Schweissnaht (Punktnaht) 18 Puls
19 Grundniveau
21 Zwischenlage
22 Prägung
23 Unterlage
24 Laserstrahl
25,25' Andruckrolle
26,26' Haltearm
27 Drahtzuführung
28,28';29,29' Spannvorrichtung
30 Schweissanlage
31 Schweissnahtabschnitt
32 Schweisspunkt
33 Strahlführungseinheit
34 Loch
d 1 ,d2,d3 Dicke
P,PO,..,P2 Strahlleistung
t Zeit
T Tiefe

## Patentansprüche

1. Verfahren zum Herstellen eines Blechbauteils (10', 10" ,20), welches ein erstes Blech (11) mit einer ersten Dicke (d1) und ein auf einer ersten Seite mit einer wärmeempfindlichen Beschichtung (15) versehenes, zweites Blech (12) mit einer zweiten Dicke (d2) umfasst, **dadurch gekennzeichnet, dass** das zweite, mit der wärmeempfindlichen Beschichtung (15) versehene Blech (12) bereitgestellt wird, dass das erste Blech (11) und das zweite Blech (12) in einem vorbestimmten Bereich miteinander in flächigen Kontakt gebracht werden, wobei die mit der wärmeempfindlichen Beschichtung (15) versehene erste Seite des zweiten Bleches (12) aussen zu liegen kommt, und dass in dem vorbestimmten Bereich mittels eines aus einer Strahlführungseinheit (33) auf das erste Blech (11) gerichteten Schweissstrahls (24) wenigstens eine aus einzelnen , voneinander beabstandeten Abschnitten (31, 32) bestehende Schweissnaht (13, 14; 16, 17) als Überlappnaht mit einer Tiefe (T) erzeugt wird, welche grösser als die ersten Dicke (d1) und kleiner als die Summe aus erster und zweiter Dicke (d1, d2) ist.

2. Verfahren nach Anspruch 1, **dadurch gekennzeichnet, dass** die beiden Bleche (11, 12) Dicken (d1, d2) von wenigen Millimetern, insbesondere zwischen 1 und 3 mm, aufweisen, und dass die wärmeempfindliche Beschichtung (15) eine Pulverbeschichtung ist, und dass vorzugsweise die beiden Bleche (11, 12) aus Stahl oder einer Aluminiumlegierung bestehen.

3. Verfahren nach Ansprüche 1 oder 2, **dadurch gekennzeichnet, dass** zur Erzeugung der wenigstens einen Schweissnaht (13, 14; 16, 17) die beiden Bleche (11, 12) und die Strahlführungseinheit (33) relativ zueinander bewegt werden, und dass vorzugsweise die beiden Bleche (11, 12) ortsfest gehalten werden und die Strahlführungseinheit (33) über die Bleche (11, 12) hinweg bewegt werden, wobei insbesondere die beiden Bleche (11, 12) im Bereich der Schweissnaht (13, 14; 16, 17) gegeneinander gepresst werden, gegebenenfalls die beiden Bleche (11, 12) auf einer Unterlage (23) liegen, wobei die Bleche (11, 12) mittels Druckrollen (25, 25') gegeneinander gepresst werden, die an der Strahlführungseinheit (33) befestigt sind und federnd auf das erste Blech (11) drücken, und bevorzugt auf beiden Seiten der Schweissnaht (13, 14; 16, 17) jeweils eine Druckrolle (25, 25') angeordnet ist.

4. Verfahren nach Anspruche 3, **dadurch gekennzeichnet, dass** die beiden Bleche (11, 12) und die Strahlführungseinheit (33) relativ zueinander über die Länge der Schweissnaht (16, 17) mit einer gleichmässigen Geschwindigkeit bewegt werden, und dass die Schweissnaht (16, 17) aus einer Mehrzahl von untereinander beabstandeten Schweisspunkten (32) besteht, die jeweils durch ein kurzzeitiges Hochfahren der Strahlleistung erzeugt werden, und dass vorzugsweise die Geschwindigkeit der Relativbewegung zwischen 10 und 100 mm/s, insbesondere zwischen 60 und 80 mm/s, beträgt.

5. Verfahren nach Anspruch 4, **dadurch gekennzeichnet, dass** als Schweissstrahl ein Laserstrahl (24) mit einer Strahlleistung von mehreren 1000 W, insbesondere etwa 4000 bis 4500 W verwendet wird, dass als Laserquelle ein diodengepumpter Nd:YAG-Laser eingesetzt wird, und dass die Strahlführungseinheit (33) mittels eines schienenmontierten 6-Achsen-Roboter bewegt wird.

6. Verfahren nach einem der Ansprüche 4 oder 5, **dadurch gekennzeichnet, dass** jeweils am Anfang eines Schweisspunktes (32) zur Verbesserung der Einkopplung des Laserstrahls (24) in die Bleche (11, 12) die Leistung des Laserstrahls (24) über einen Zwischenwert hochgefahren wird.

7. Verfahren nach einem der Ansprüche 3 bis 6, **dadurch gekennzeichnet, dass** die Schweissnaht (16, 17) als Steppnaht ausgebildet ist und aus einer Mehrzahl von untereinander beabstandeten Schweissnahtabschnitten (31) besteht, und dass vorzugsweise zur Ausbildung der Schweissdrahtabschnitte (31) ein Schweisszusatzwerkstoff zugeführt wird.

8. Verfahren nach einem der vorhergehenden Ansprüche, **dadurch gekennzeichnet, dass** zwischen den beiden Blechen (11, 12) eine Zwischenlage (21) mit schall- und/oder wärmeisolierender Wirkung angeordnet wird, welche an den für die Schweissverbindung vorgesehenen Stellen jeweils ein Loch (34) aufweist, und dass das erste Blech (11) an den für die Schweissverbindung vorgesehenen Stellen jeweils mit einer an die Löcher (34) angepassten Prägung (22) versehen ist, mit welcher sie durch die Löcher (34) in der Zwischenlage (21) hindurch mit dem zweiten Blech (12) in flächigen Kontakt gebracht wird.

9. Blechbauteil (20) **dadurch gekennzeichnet, dass** ein erstes Blech (11) und ein auf einer ersten Seite mit einer wärmeempfindlichen Beschichtung (15) versehenes, zweites Blech (12) zusammen mit einer schall- und/oder wärmeisolierenden Zwischenlage (21) unter Bildung einer Sandwichstruktur derart miteinander verbunden sind, dass die mit der wärmeempfindlichen Beschichtung (15) versehene erste Seite des zweiten Bleches (12) aussen zu liegen kommt, dass die beiden Bleche (11, 12) über eine Mehrzahl von Schweissnahtabschnitten (31) miteinander stoffschlüssig verbunden sind, und dass die Schweissnahtabschnitte (31) im Bodenbereich von in das erste Blech (11) eingebrachten Prägungen (22) angeordnet sind, mit welchen das erste Blech (11) durch entsprechende Löcher (34) in der Zwischenlage (21) hindurch mit dem zweiten Blech (12) in flächigem Kontakt steht.
